# EUROPEAN PATENT APPLICATION

(11) **EP 4 646 964 A1**
(43) Date of publication of application: **12.11.2025**
(21) Application number: 25174416.5
(22) Date of filing: 06.05.2025
(51) Int. Cl.: A45D 29/00

(54) **ELECTRONIC NAIL FILE WITH RECHARGEABLE CHARGING BASE**

(30) Priority: 10.05.2024 US 202463645711 P; 13.05.2024 US 202463647071 P; 02.05.2025 US 202519197784
(71) Applicant: KULR Beauty Systems, Inc., Austin TX 78731 (US)
(72) Inventor: Hurter, Richard B., Austin, TX 78731 (US)
(74) Representative: Cohausz & Florack

(57) **Abstract**

The disclosure relates to a portable electric nail filing system, the system including a control box for supplying power and control to an electric nail file handpiece, the control box including a rechargeable battery and a processor. Also, a charging base is provided for engaging the control box, the charging base operable to recharge the rechargeable battery of the control box while the control box is engaged with the charging base, the charging base also including a rechargeable battery to be charged from an external source such as an AC outlet.

## Description

### CROSS-REFERENCE TO RELATED APPLICATIONS

The present application claims the benefit of U.S. Provisional Application No. 63/645,711, filed May 10, 2024, and U.S. Provisional Application No. 63/647,071, filed May 13, 2024, the contents of each of which are expressly incorporated herein by reference in their entireties.

### STATEMENT RE: FEDERALLY SPONSORED RESEARCH/DEVELOPMENT

Not Applicable

### BACKGROUND

### Technical Field

The present inventive subject matter relates generally to an electronic nail file system comprising an electric nail file control box having a rechargeable battery, the control box being capable of controlling and supplying power to an electric file handpiece. The control box is also capable of engaging with a charging base, the charging base capable of supplying power to charge the control box, the charging base also comprising a rechargeable battery.

### Background

Traditional electric nail files for manicures in the nail salon industry include a stationary variable speed control box that provides power and control to a nail file handpiece. The hand piece typically includes a motor for spinning a mandrel that is used in filing and servicing nails. The handpiece is interconnected to the control box by a cord that provides power and control to the handpiece. The control boxes typically have an on-off switch, one or more illuminated power indicators, a speed control dial to change the speed of the rotating hand piece, and a switch for changing the direction of the rotating hand piece, i.e. forward and reverse. One such device is MANIPro^{™} original offered by Kupa, Inc. of Anaheim, CA. Such stationary control box electric nail files must be positioned in close proximity of the handpiece limited by the length of an interconnecting cord. As such, these stationary control boxes for electric nail files have limited portability.

Portable electric nail files have also been offered such as the MANIPro Passport^{®}, sold by Kupa, Inc. of Anaheim, CA. Portable electric nail files have a smaller and lighter portable control box that interconnects to a rotating handpiece by a cord, the control box also having a rechargeable battery. A dial is located on the top of the control box, along with a power indicator and a switch for changing the rotation of direction of the rotating mandrel. Portable electric nail files can provide anywhere from 8 to 10 hours of use per charge in either 110v or 220v. A user charges the control box, and then can disconnect the charging cord, and have a portable electric nail file. A belt clip and a plastic handpiece holster which can connect to the control box. In this way, a portable electric nail file user can move about and use the nail file while the control box remains charged.

Also, portable electric nail files have been offered with a complementary charging base, as described for example in United States Patent No. 11,484,107 issued November 1, 2022 to Hurter, the contents of which, in its entirety is expressly incorporated herein by reference. In Hurter, the charging base supplies power to a control box and provides power to charge a battery internal to the control box when the control box is docked with the charging base and the charging base is connected to an external power source such as an AC power source.

All U.S. patent publications and issued U.S. patents referenced herein are incorporated by reference to the same extent as if each individual publication or patent application were specifically and individually indicated to be incorporated by reference. Where a definition or use of a term in an incorporated reference is inconsistent or contrary to the definition of that term provided herein, the definition of that term provided herein applies and the definition of that term in the reference does not apply.

### BRIEF SUMMARY

The disclosure relates to a portable electric nail filing system, the system including a control box for supplying power and control to an electric nail file handpiece, the control box including a rechargeable battery and a processor for receiving user input and controlling a motorized hand piece or drill. Also, a charging base is provided for engaging the control box. The charging base has a recess having interior contacts, the recess being sized and shaped for receiving the charging base and to hold the control box in an upright and angled position. The control box may be used to operate the handpiece while the control box is docked in the charging base. The charging base is operable to recharge the rechargeable battery of the control box while the control box is engaged with the charging base via charging contacts. A rechargeable battery is also provided within the charging base which may be charged from an external source such as an AC outlet.

In operation, the charging base may be connected through a charging port to an AC outlet. Connecting to the AC outlet provides power to the base to allow the rechargeable battery of the charging base to be charged and recharged. A charging controller located within the charging base, regulates the charging of the battery internal to the charging base. Once the control box of the electric nail file is inserted into a recess of the charging base, contacts on the control box engage with contacts within the recess of the charging base to allow power to be transferred from the charging base to the control box, to supply power for operations of a nail drill handpiece and to also provide power to charge and recharge a battery located within the control box. The power operations for charging and recharging of the battery in the base, the battery in the control box and to provide power to the handpiece may be regulated from a power controller within the charging base, or a power controller in the control box, or by a combination of power controllers, one located on board the charging base and one onboard the control box. These power controllers may operate independently or in conjunction with each other, depending on whether the control box is inserted or removed from the charging base, and when the control box is inserted into the charging base, depending on whether the charging base is connected to an AC outlet. Power regulation may also be regulated by the processor of the control box. In examples of operation, when the adapter is powered on and inserted into the base, and then the control box stays in the charging dock, only the control box is charging, and the base is not charged. In another example of operation, when the control box is operating and docked with the charging base, power will be supplied to the control box for charging the control box battery the charging base battery will not charge.

In a further operation, the control box may be engaged with the charging base, when the charging base is not connected to an AC outlet. In this mode of operation, the rechargeable battery located in the charging base may supply power to the control box for operations of a drill handpiece or may operate to provide power to charge and recharge the battery on board the control box. When using the control box and nail handpiece, if it stays in the base and is also charging, it will use the battery power of charging dock first when at low speed. The battery level of the base is prioritized; if the control box handpiece is operating at high power (high speed), due to the maximum power of 60W, the battery on the control box will also participate in working discharge at the same time (the battery of control box and the battery of base are powered simultaneously or supply power simultaneously). In this further mode of operation, if the charging base battery is depleted, the battery on board the control box will operate as if it were not connected to the charging base. If the charging base battery is depleted, the user can operate the control box engaged with the charging base or remove the control box from the charging base and it will operate in a further mode of operation as a typical portable electric nail file. When the charging base battery and the control box are both fully charged, in normal operation, the charging life of the battery combination may increase the time to recharge as much four times over the charge life of a typical rechargeable portable electronic nail drill. The present disclosure contemplates that the rechargeable battery in the control box is identical to the rechargeable battery in the charging base, thus reducing manufacturing costs by single sourcing the battery, although this disclosure contemplates that the rechargeable batteries in the control box and the charging base may be different and/or have different charging capacities.

In addition, the disclosure contemplates that the control box and/or charging base may have removable cover panels that allow the user to choose from different colors or styles of cover panels. In this way, the user can change the look of the control box or charging base, by selecting from a choice of identically structured, but visually different cover panels to be inserted on the box and/or base.

### BRIEF DESCRIPTION OF THE DRAWINGS

These and other features and advantages of the various embodiments disclosed herein will be better understood with respect to the following description and drawings, in which like numbers refer to like parts throughout, and in which:
Figure 1 is the described portable electric nail file positioned in a recharging carriage;
Figure 2 is an exploded view of the electric nail file and recharging carriage of Fig. 1;
Figure 3 is a top view of the of the electric nail file positioned in the recharging carriage;
Figure 4 is a reverse perspective view of Figure 4 showing the control box exploded from the recharging carriage;
Figure 5 is an exploded view of the control box of the electric nail file, showing various components of the control box;
Figure 6 is an exploded view of the recharging carriage showing various components of the recharging carriage;
Figure 7 is a side cross sectional view of the control box and recharging carriage; and
Figure 8 is a functional block diagram of the digital operational components of the disclosed device.

Common reference numerals are used throughout the drawings and the detailed description to indicate the same elements. In addition, attached is a drawing Appendix showing differing images of the disclosed device all of which are incorporated herein by reference.

### DETAILED DESCRIPTION

The detailed description set forth below in connection with the appended drawings is intended as a description of certain embodiments of an electric nail file apparatus, system and method and is not intended to represent the only forms that may be developed or utilized. The description sets forth the various structure and/or functions in connection with the illustrated embodiments, but it is to be understood, however, that the same or equivalent structure and/or functions may be accomplished by different embodiments that are also intended to be encompassed within the scope of the present disclosure. It is further understood that the use of relational terms such as first and second, and the like are used solely to distinguish one entity from another without necessarily requiring or implying any actual such relationship or order between such entities.

The background, summary and the above description includes information that may be useful in understanding the present disclosure. It is not an admission that any of the information provided herein is prior art or relevant to the presently claimed inventive subject matter, or that any publication specifically or implicitly referenced is prior art.

In some embodiments, the numbers expressing dimensions, quantities, quantiles of ingredients, properties of materials, and so forth, used to describe and claim certain embodiments of the disclosure are to be understood as being modified in some instances by the term "about." Accordingly, in some embodiments, the numerical parameters set forth in the written description and attached claims are approximations that can vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the disclosure are approximations, the numerical values set forth in the specific examples are reported as precisely as practicable. The numerical values presented in some embodiments of the disclose may contain certain errors necessarily resulting from the standard deviation found in their respective testing measurements.

As used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise.

As used herein, and unless the context dictates otherwise, the term "coupled to" is intended to include both direct coupling (in which two elements that are coupled to each other contact each other) and indirect coupling (in which at least one additional element is located between the two elements). Therefore, the terms "coupled to" and "coupled with" are used synonymously.

Unless the context dictates the contrary, all ranges set forth herein should be interpreted as being inclusive of their endpoints, and open-ended ranges should be interpreted to include commercially practical values. Similarly, all lists of values should be considered as inclusive of intermediate values unless the context indicates the contrary.

The recitation of ranges of values herein is merely intended to serve as a shorthand method of referring individually to each separate value falling within the range. Unless otherwise indicated herein, each individual value is incorporated into the specification as if it were individually recited herein. All methods described herein can be performed in any suitable order unless otherwise indicated herein or otherwise clearly contradicted by context. The use of any and all examples, or exemplary language (e.g. "such as") provided with respect to certain embodiments herein is intended merely to better illuminate the disclosure and does not pose a limitation on the scope of the claimed inventive subject matter. No language in the specification should be construed as indicating any non-claimed element essential to the practice of the inventive subject matter.

Groupings of alternative elements or embodiments of the inventive subject matter disclosed herein are not to be construed as limitations. Each group member can be referred to and claimed individually or in any combination with other members of the group or other elements found herein. One or more members of a group can be included in, or deleted from, a group for reasons of convenience and/or patentability. When any such inclusion or deletion occurs, the specification is herein deemed to contain the group as modified thus fulfilling the written description of all Markush groups used in the appended claims.

The following discussion provides many example embodiments of the inventive subject matter. Although each embodiment represents a single combination of inventive elements, the inventive subject matter is considered to include all possible combinations of the disclosed elements. Thus if one embodiment comprises elements A, B, and C, and a second embodiment comprises elements B and D, then the inventive subject matter is also considered to include other remaining combinations of A, B, C, or D, even if not explicitly disclosed. Various objects, features, aspects and advantages of the inventive subject matter will become more apparent from the following detailed description of preferred embodiments, along with the accompanying drawing figures in which like numerals represent like components.

It should be apparent to those skilled in the art that many more modifications besides those already described are possible without departing from the inventive concepts herein. The inventive subject matter, therefore, is not to be restricted except in the scope of the appended claims. Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refers to at least one of something selected from the group consisting of A, B, C .... and N, the text should be interpreted as requiring only one element from the group, not A plus N, or B plus N, etc.

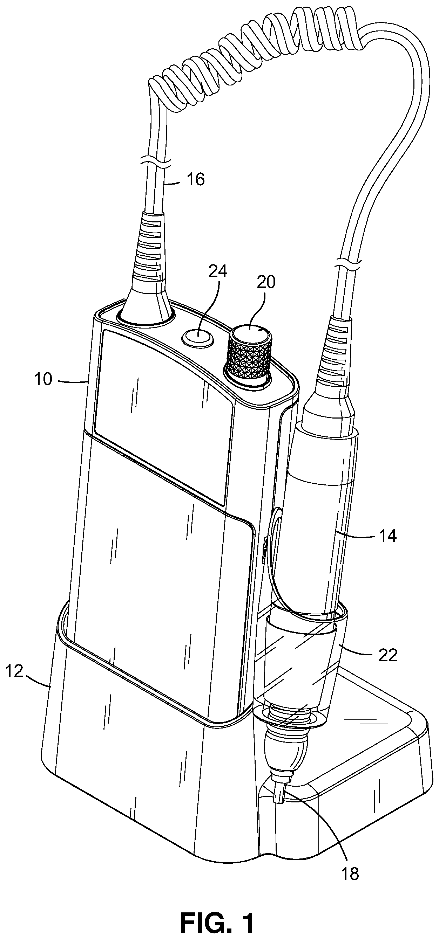

Referring particularly to Fig. 1, there is shown the disclosed electric nail file control box 10 engaged with a charging base 12. As used in this disclosure, the charging base 12 may also be interchangeably referred to herein as a recharging base, recharging carriage and/or charging carriage. A nail file handpiece 14 is interconnected to the control box 10 via a cord 16. Cord 16 supplies power and control signals from control box 10 to the handpiece 14. The handpiece 14 includes a rotating electric motor (not shown) that drives a rotating bit 18. Electric nail file tools can be attached to the rotating bit 18 such as sanding bands used for nail manicures or other manicure tools (not shown). A retainer 22 is releasably attached to the side of the control box 10, so that a handpiece 14 can be stowed on the side of the box 10 when the handpiece 14 is not in use.

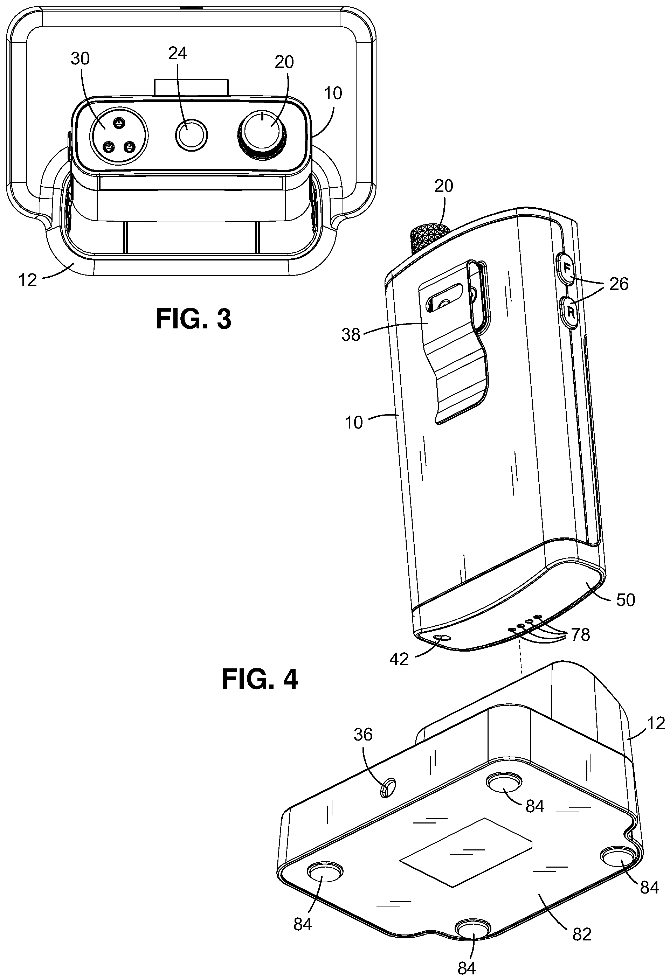

Control box 10 includes manual controls in the form of a speed dial 20. In the power off position of dial 20, no power is supplied to chord 16 or to the handpiece 14. The user turns on the power by turning the dial 20. As the dial is turned, the speed of the motor in the hand piece 14 increases or decreases depending on the direction of the turn of the dial 20. A pause button 24 may be activated by pressing on the button 24 to stop the motor of the hand piece 14 while the control box 10 is powered on through the dial 20. The direction of spin of the motor of the hand piece 14 can be changed by operating a manual switch 26 (shown in Fig. 4) so that a user may push on the top contact to cause the motor of the hand piece 14 to turn in a first direction and a second contact to cause the motor of the hand piece 14 to turn in a second direction. Generally, the direction of the spin may be referred to as forward and reverse.

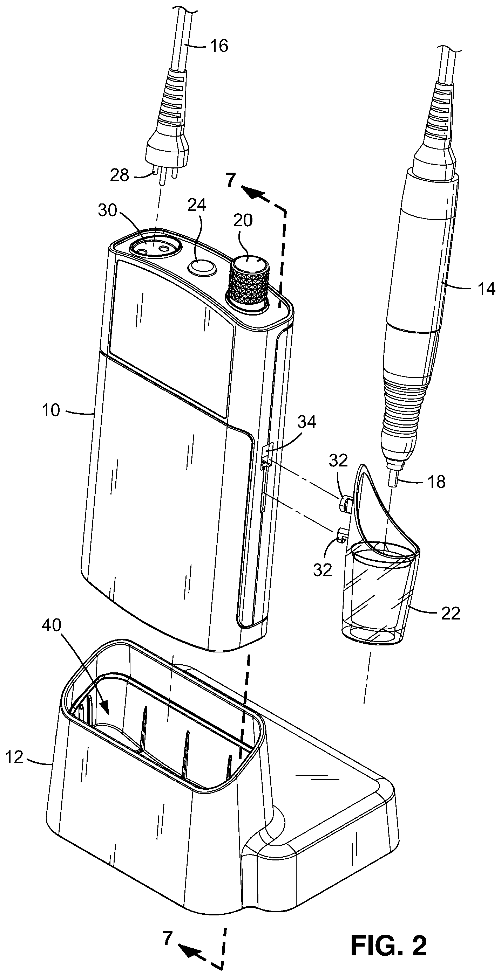

Referring particularly to Fig. 2, there is shown an exploded view of components of Fig. 1, including the electric nail file control box 10, base 12, cord 16, handpiece 14, and retainer 22 to demonstrate how such components interconnect and separate. Cord 16 includes a three-prong interface 28 that is received into interface port 30, having a corresponding three recesses to receive the three prongs of the three-prong interface 28. The three prongs of the three-prong interface 28 when engaged with interface port 30 provide a firm attachment with greater stability than standard two prong connections. Since a user will be using the handpiece 14 in operation, there will be pulling forces placed upon cord 16 and interface 28, and the three-prong interface 28 in combination with the port 30 provides firm connection, less likely to be separated during normal use. Handpiece 14 may be selectively inserted into retainer 22, and retainer 22 includes protrusions 32 that are sized and shaped to be received and interlocked into opening 34 of the control box 10. It is contemplated by this disclosure that a mirror image opening of opening 34 may be formed on the opposite side of the control box 10 so that the retainer 22 can be positioned on either side of the control box 10. A recess 40 is formed in charging base 12 which is sized and positioned to be complementary to the bottom of the control box 10 such that the control box 10 nests within the charging base 12.

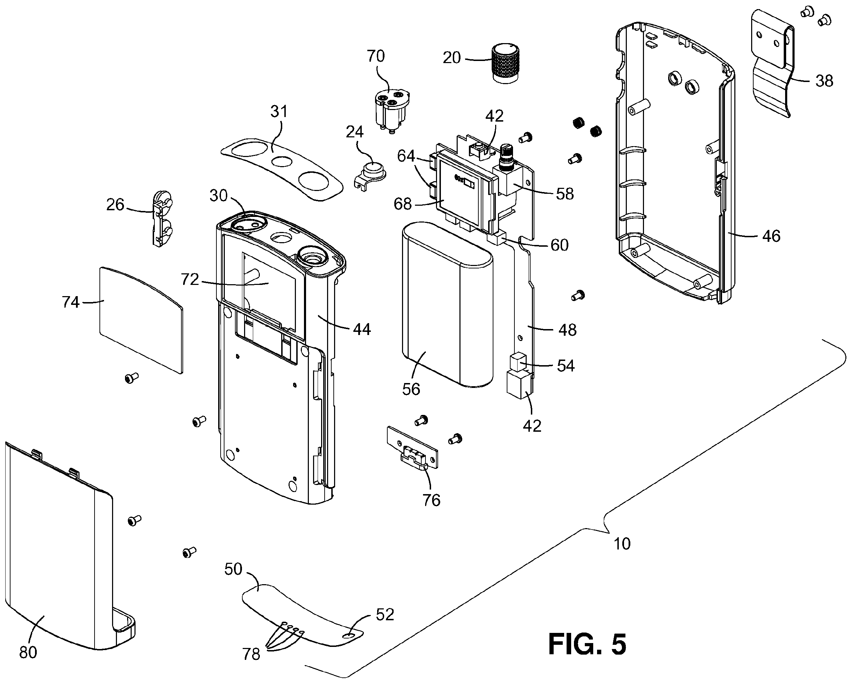

Referring to Fig. 3, the interface port 30 along the side of the top of the control box 10 enables the placement of pause button 24 in the center and speed dial 20 on the opposite side. Referring to Fig. 4, control box 10 is shown exploded from the base 12. The rear of the base 12 is shown with a power port 36 for connecting the base 12 to an AC outlet to provide power to the charging base 12 to charge the internal battery of the base 12, or via electrical connections 76 (shown in Fig. 5) through charging pin holes 78, charge the internal battery of the control box 10. A belt clip 38 is attached to the rear of the control box 10 for attaching the control box 10 to a belt or waistline band and is biased to lock into place for secure attachment. A charging port 42 is shown along the bottom of the control box 12, for connecting the control box 10 to an AC power outlet as an alternate means of charging the battery of the control box 10, without the use of the charging base. Also shown in Fig. 4 is the forward and reverse switch 26, that has a top contact for causing the spin of the motor of the hand piece 14 to move forward in a first direction, and the bottom contact for causing the spin of the motor of the hand piece to move in the reverse direction relative in a second direction. The charging base 12 includes a bottom plate 82 with attached rubber feet 84 to provide frictional resistance on a surface where the base 12 is placed.

Referring to Fig. 5, there is a shown an exploded view of control box 10 showing the various components that make up control box 10. A plastic front shell 44 and plastic rear shell 46 together form a housing in which the various components of control box are contained within. A bottom panel 50 encloses the bottom of control box 10. The front shell 44, rear shell 46, and bottom panel 50 may all be formed of thermoplastic such as Acrylonitrile Butadiene Styrene (ABS) or other suitable plastic. A printed circuit board (PCB) 48 is positioned within the housing formed by front shell 44 and rear shell 46, and the PCB 48 carries the electronic components of the control box 10. A rechargeable battery 56 is also positioned within the housing formed by front shell 44 and rear shell 46 adjacent and below the PCB 48. The battery 56 is in electrical communication with the PCB 48. The battery 56 may be a rechargeable lithium battery pack and may be used in conjunction with a battery management system. Although a lithium battery is disclosed, any suitable rechargeable battery may be used.

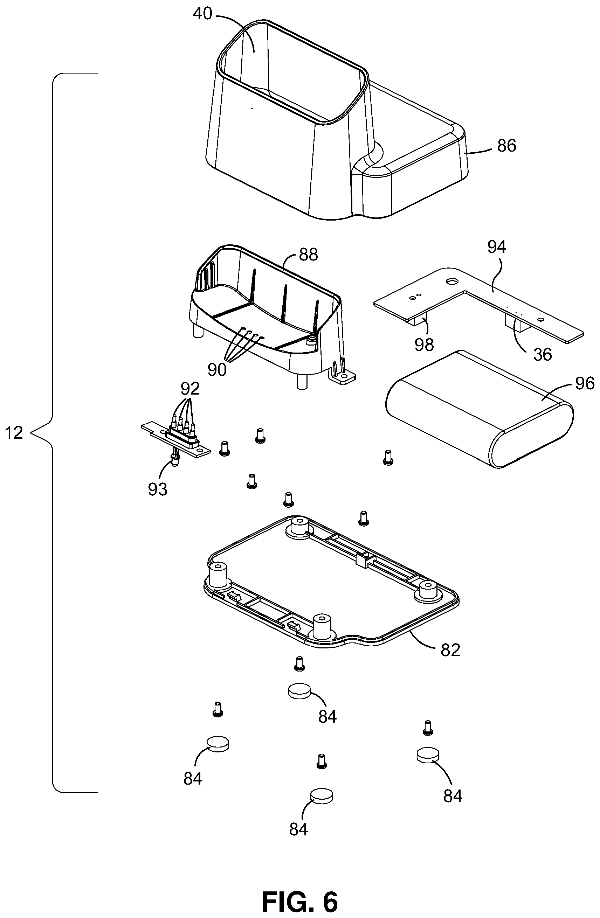

Charging pin ports 76 are attached to the front shell 44 and positioned below the battery 56 to engage with the electrical contacts (not shown) of the battery 56. The charging pin ports 76 are accessible through charging pin holes 78 formed in the bottom panel 50. In operation, when control box 10 is nested within the charging carriage 12, charging pins (see Fig. 6) of the carriage 12 protrude through the holes 78 to engage charging pin ports 76, which are in electrical communication with battery 56. The battery 56 in this mode of operation is charged through the charging carriage 12.

As an alternate means of charging battery 56, power port 42 is positioned on the PCB 48 at the base of control box 10 and is accessible through opening 52 formed in the panel 50. Power operations controller 54 resides on the PCB 48 in electrical communication with the port 42 and the other electronics of control box 10. The power operations controller 54 regulates the power received from an AC power source through port 42 to charge the control box internal rechargeable battery 56. The battery 56 is in electrical communication with the PCB 48.

The PCB 48 also includes a speed dial interface 58 that detects signals from manual manipulation of the speed dial 20 to provide such signals to an electrically interconnected onboard processor 60 via PCB 48. A pause button interface 62 detects activation of the pause button 24 through manual manipulation and communicates the detection by signals to the processor 60. Interface 64, likewise detects the manual manipulation of forward/reverse buttons 26 to communicate signals to the processor 60. The signals received from the various manual interfaces are communicated to the processor 60, and the processor 60 in turn sends signals to a controller (not shown) on board in the hand piece 14 to control operations of the hand piece 14.

An LCD display 68 is also included on PCB 48 and receives signals from the processor 60 to display information relevant to the user such as power remaining, whether the motor is forward or in reverse, the revolution speed (RPM) of the drill bit 18 of the handpiece motor 14, and a pause indicator if the user has selected "pause". The LCD display 68 is visible to the user through an opening 72 formed in the front shell 44. A transparent panel 74 is placed over the opening 72 to protect the LCD screen from direct contact by users. The PCB 44 is also in communication with connector 70 accessible through openings formed in interface port 30. The prongs of the three-prong interface 28 engage connector 70 through the interface port 30, and the processor 60 can supply control instructions to the handpiece 14.

Control box 10 also includes a removable cover 80 that allows the user to choose identically structured removable covers that have different colors, surface textures, artwork, or other indicia. In this way, the user can change the look of the control box or charging base, by selecting from a choice of identically structured, but visually different cover panels to be installed on control box 10. A belt clip 38 is attached to the back of rear shell 46. Cover 31 finishes the top of the control box 10 by covering the top of piece 44.

Electronic components such as the control circuitry which may include the various interface detectors, processor 60, memory (not shown), RF transceiver (not shown) and power control circuitry which may include a processor and memory (not shown) and reside on the PCB 48. The location of the digital circuitry components on the PCB board 48 prevents the electronics from exposure to the user. Because the electronics are positioned internally, such components are less susceptible to damage or exposure to the elements.

Referring to Fig. 6, there is a shown an exploded view of the base 12 showing the various components that make up the base 12. An outer casing 86 attaches to a bottom plate 82. Rubber feet 84 are attached to the bottom of the bottom plate 82 to provide frictional resistance on a surface where the base 12 is placed. These rubber feet 82 resist skidding or movement of the base 12 on a surface. An inner receptacle 88 is positioned within the opening 40 to engage the bottom of the control box 10. The receptacle 88 includes pin openings 90 through which charging pins 92 protrude to enable engagement with charging pin ports 76 of the control box 10 when engaged with the charging carriage 12. An LED 93 is interconnected to a PCB that is also attached charging pins 92, and the LED 93 provides an indication that control box 10 is properly docked with the base 12. The LED 93 also may provide an indication of whether or not the base 12 is providing power to the control box 10. The LED 93 may also illuminate in different colors depending on the charging state of the box 10. For example, the LED 93 may illuminate in green when the battery of the control box 10 is fully charged or may also illuminate red until the battery 56 of the control box 10 fully charged. As a further example, in the scenario where the base 12 battery 96 is depleted, the LED 93 may not illuminate to indicate that the base 12 cannot provide a charge. The LED 93 may be interconnected to a light bar (not shown) that protrudes from the base 12 to provide increased visibility. The power operation controller 54 regulates the power received from an AC power source through port 42 to charge the control box internal rechargeable battery 56. The battery 56 is in electrical communication with the PCB 48.

Included within the housing, formed by outer casing 86 and bottom plate 82, is a PCB 94 which surrounds the internal rechargeable battery 96. A charging port 36 is positioned on the PCB 94. The charging port 36 is in electrical communication with a power controller 98 via PCB 94. The power operation controller 98 regulates the power received from an AC power source through port 36 to charge rechargeable battery 96. The battery 96 is in electrical communication with the PCB 94. The battery 96 may be a rechargeable lithium battery pack and may be used in conjunction with a battery management system. Although a lithium battery is disclosed, any suitable rechargeable battery may be used.

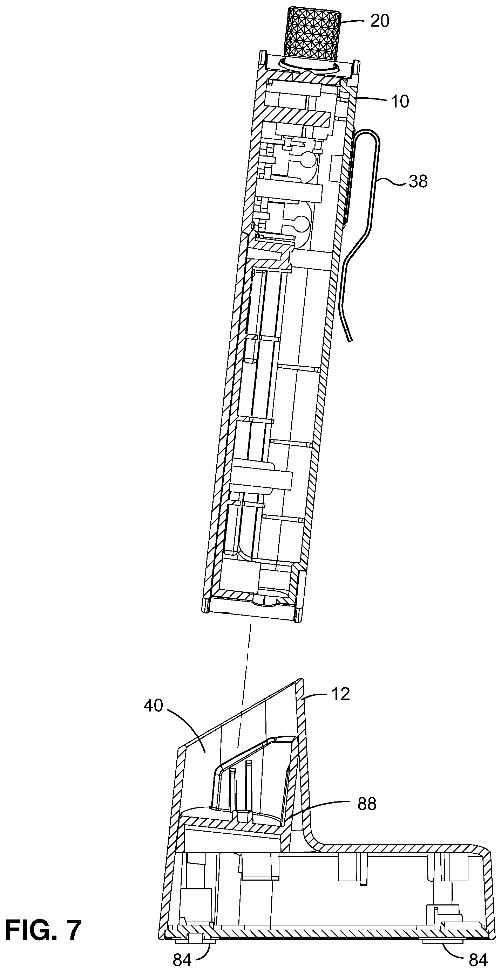

Referring to Fig 7, there is shown a cross sectional side view of the control box 10 exploded from charging base 12, also in cross-sectional side view along the line 7-7 as shown in Fig. 2. When the control box 10 is received in the recess 40 of the charging base 12, charging pin ports 76 (Fig. 5) interface with charging pins 92 (Fig. 6) to supply power to the control box 10. The charging base 12 recess 40 incorporating receptacle 88 is formed at an angle to facilitate use of the control box 10 with the handpiece 14 while the box 10 docked in the charging base 12. The weight of the charging base 12, along with the angle at which the control box 10 rests within the base 12, reduces the possibility of pulling of the control box 10 from the charging base 12 while it is in use while being charged. The weight of the charging base 12 is designed so that when the control box 10 is cradled, the center of mass of the items aids in preventing the device from tipping, with the expected tugs on the wire 16 during use. Control box 10 includes LCD display 68 (Fig. 5) which is visible from the front of control box 10, to allow the user to note the operations of the box 10 and handpiece 14 from the display 68. Additionally, the angled position of the control box 10 aids in the visibility to the user of the display 68 while the control box 10 is docked within the recess 40 of the charging base 12.

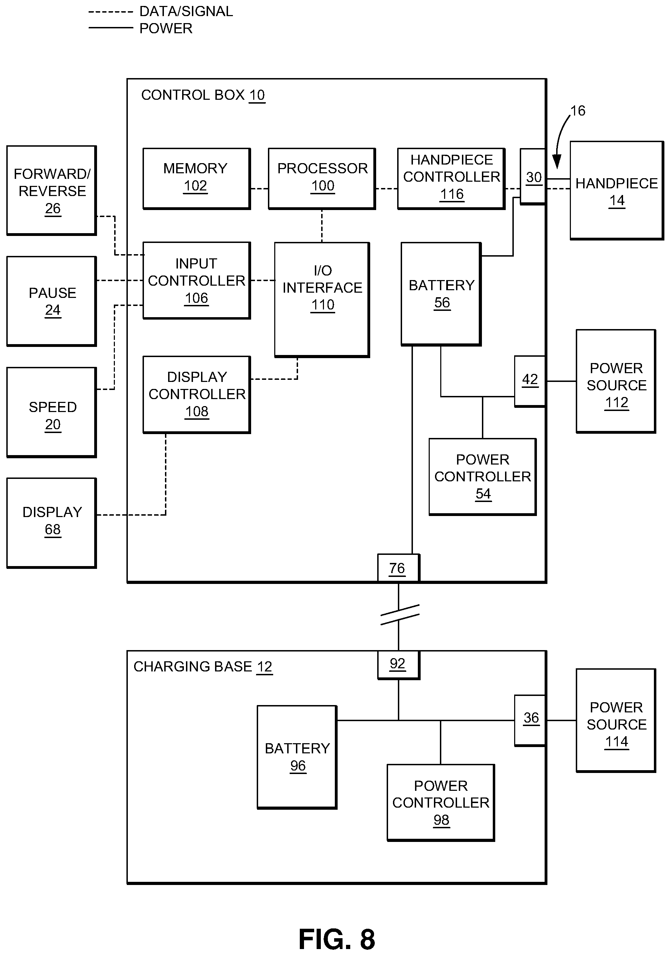

Referring to Fig. 8, there is shown an example of a functional block diagram of one configuration of digital operational components and systems of control box 10. For purposes of Fig. 8 herein, dashed lines between components represent signal or data paths and solid lines between components represent electrical communication paths for power. Operations include a processor 100 configured to execute software instructions stored on a memory 102 that may include a tangible, non-transitory computer readable storage medium (e.g., hard drive, solid state drive, RAM, flash, ROM, etc.). Further, aspects of the disclosed technologies can be embodied as an embedded or computer program product that includes the memory 102 storing the software instructions that causes a processor 100 to execute the disclosed steps associated with implementations of computer-based algorithms, processes, methods, or other instructions. The software instructions preferably configure the processor 100 to detect user input through an input/output interface 110 in electrical communication with an input controller 106 that receives inputs from a user through forward/reverse buttons 26, pause button 24 and/or speed dial 20. Also, the processor 100 may drive data through the input/output interface 110 to a display controller 108 that drives a display 68. It is contemplated by this disclosure that the processor 100 may also receive user input through the input/output interface 110 from a radio frequency (RF) input controller (not shown) coupled to an RF receiver (not shown). The RF receiver may wirelessly connect to a number of external peripherals such as a mobile device or device interface such as a foot pedal. The RF transmitter may be a Bluetooth^{®} connection, but can be any suitable wireless connections, Wi-Fi, radio frequency, RFID, Wi-Fi Direct, cellular, infrared, WiMAX, Zigbee, or WiGIG connections. Communication to or from a RF receiver and/or RF transmitter can include long-range communications or communications such as cellular communication and Wi-Fi.

In operation, an RF receiver receives user input from a peripheral such as a foot pedal. The foot pedal may include an RF transmitter to transmit data from the user's operation of the foot pedal to the RF receiver on board the control box 10. In operation, upon receiving user input from one or more of forward reverse 26, pause button 24, speed dial 20, or foot pedal (not shown), the processor 100, through software instructions residing on memory 102, directs a handpiece controller 116 to operate the handpiece 14. In this regard the processor 100 may drive, adjust speed, halt, or reverse motor operation of handpiece 14. At the same time, the processor 100 may display speed and direction of the motor as discussed herein with respect to the disclosed apparatus on display 68. Control signals and power to the handpiece 14 are transmitted via cord 16.

Software resident on the memory 102 enables the processor 100 to retain data on the motor speed and direction of handpiece 14. After the device 10 is powered down, upon restarting, the memory 102 and processor 100 remembers last settings of motor speed so that when the devices power up, it operates at the same settings. When the battery 56 is removed or the system is not coupled to a power source, the device 10 forgets last settings and defaults to the slowest speed and forward direction when the device is turned on again. However, it is contemplated that the device can store such setting and previous speed even when decoupled from a power source.

The processor 100 and memory 102 implements, in one example of operation, may have switchless motor direction control. In such example, the disclosed device may use H bridge MOSFET circuit design to control motor direction of the handpiece 14, and when the motor of handpiece 14 changes direction, the motor of handpiece 14 has enough time (approximately 2 seconds) to break-stop-reverse to avoid high pulse current to occur, which helps to extend motor and battery cycle life. In this regard, the handpiece 14 motor, upon a user's command to change direction, pauses automatically and then changes direction.

As used in the description herein and throughout the claims that follow, when a system, engine, server, device, module, or other computing element is described as configured to perform or execute functions on data in a memory, the meaning of "configured to" or "programmed to" is defined as one or more processors or cores of the computing element being programmed by a set of software instructions stored in the memory of the computing element to execute the set of functions on target data or data objects stored in the memory.

It is disclosed that the handpiece 14 motor speed may be driven by variable speed control. Variable speed control is more fluid in operations and facilitated by the digital control. Likewise, variable speed control can be translated through the use of external peripherals such as a foot pedal. Variable speed control may be in the form of a software module executed by the processor 100 resident on the memory 102.

The system may include a power manager for supplying power to operate the various components of the device. Power management includes incorporating one or more power sources such as a battery or AC power. Also, the power manager may act to recharge a battery and to detect degree of battery charge, and to supply that information to the processor for display on one or more display devices such as a display screen 68.

The disclosed system includes a rechargeable battery 56 in the control box 10 and a battery 96 in the recharging base 12. The battery 56 provides power to the various electronic components of control box 10. The rechargeable battery 56 may be recharged in at least two different ways. In a first example, when the control box 10 is not docked with the recharging base 12, the rechargeable battery may be charged via power port 42 through a wire attached to an external power source 112. In this mode of operation, the control box 10 may be powered and used much like a typical portable nail drill. A power controller 54 is in electrical communication with the power components of the box 10 and monitors and regulates power intake through the power port 42 from external power source 112. In a second example, the rechargeable battery 56 may be recharged by docking control box 10 with charging base 12. In this example of operation, power is supplied to the battery 56 through pin port 76 that engages with charging pins 92 of the base 12. Power controller 54 is in electrical communication with the power components of the box 10 and monitors and regulates power intake through the pin port 76 from the battery 96 of the base 12 via charging pins 92. The power supplied to charging pins 96 is supplied from battery 96 of the charging base 12. In another example of operation, the power controller 98 of the base 12 may bypass the battery 96 and deliver power from power source 114 through port 36 to pins 92 for charging of battery 56 of the control box 10 or to otherwise provide operational power to the electronic components of control box 10.

The battery 96 in base 12 may be charged from power source 114 through power port 36. A power controller 98 is in electrical communication with the power components of the base 12 and monitors and regulates power intake through the power port 36 from external power source 114.

In an example mode of operation, wherein the box 10 is not docked with base 12, the box 12 may operate similar to a standard portable control box for an electronic nail file and the battery may be recharged via power port 42 connected to an external power source 112. In this mode of operation, the base 12 battery 96 is charged through power port 36 via an external power source 114.

In a further example mode of operation, wherein the control box 10 is docked with the base 12, and the base 12 is connected to an external power source 114, the battery 96 is charged from the power source 114, and the battery 96 supplies power to pins 92 which interface with pin port 76 and charges battery 56 for powering operations of the control box 10. In an alternative aspect of operation, power controller 98 of the base 12, may bypass battery 96 and direct power from power source 114 through port 36 directly to pins 92 which interface with pin port 76 and provides power to charge battery 56 for powering operations of the control box 10.

In another example mode of operation, wherein the control box 10 is docked with base 12, and the base 12 is not connected to an external power source, the battery 96 will charge battery 56 of the control box 10 through the previous described path of pins 92 to pin port 76. In this regard, when not connected to an external power source, the battery 96 will deplete its charge first before the battery 56 begins depletion of its charge in control box 10.

The above description is given by way of example, and not limitation. Given the above disclosure, one skilled in the art could devise variations that are within the scope and spirit of the disclosure herein. Further, the various features of the embodiments disclosed herein can be used alone, or in varying combinations with each other and are not intended to be limited to the specific combination described herein. Thus, the scope of the claims is not to be limited by the illustrated embodiments.
The following embodiments are also enclosed:
1. A portable electric nail filing system, the system comprising:
   an electric file handpiece;
   a control box for supplying power to the electric nail file handpiece, the control box including a rechargeable battery and a processor; and
   a charging base for engaging the control box, the charging base operable to recharge the rechargeable battery of the control box while the control box is engaged with the charging base, the charging base comprising a rechargeable battery.
2. The portable electric nail filing system of embodiment 1, wherein the charging base includes a recess for receiving the control box.
3. The portable electric nail filing system of embodiment 2, wherein the control box and the recess of the charging base include corresponding electrical contacts that interface to supply power from the charging base to the rechargeable battery of the control box.
4. The portable electric nail filing system of embodiment 2, wherein the recess is formed at an angle to facilitate use of the electric nail file handpiece while the control box is engaged with the charging base with a reduced possibility of pulling the control box from the charging base.
5. The portable electric nail filing system of embodiment 1, wherein the rechargeable battery of the charging base is charged through a charging port located within the charging base.
6. The portable electric nail filing system of embodiment 1, wherein the rechargeable battery of the control box may be charged through a charging port located within the control box.
7. The portable electric nail filing system of embodiment 1, wherein the electric nail file handpiece has a cord able to be releasably secured to the control box wherein the control box supplies power to the electric file handpiece.
8. The portable electric nail filing system of embodiment 1, wherein the control box further comprises an LCD display, wherein information is displayed to the user.
9. The portable electric nail filing system of embodiment 4, wherein when the electric nail file handpiece is being used and the control box is engaged with the charging base and the charging base is not connected to an external power source, the rechargeable battery of the charging base will be depleted before the rechargeable battery of the control box begins depletion of its charge.
10. The portable electric nail filing system of embodiment 1 wherein, the charging base has an LED indicator to communicate information to the user.
11. The portable electric nail filing system of embodiment 1 wherein the control box further comprises a control box power controller and the charging base further comprises a charging base power controller.
12. The portable electric nail filing system of embodiment 1 wherein the control box further comprises a control box power controller.
13. The portable electric nail filings system of embodiment 6 wherein the control box further comprises a control box power controller and wherein the control box power controller monitors and regulates power intake from an external power source connected to the charging port of the control box.
14. The portable electric nail filing system of embodiment 1 wherein the charging base further comprises a charging base power controller.
15. The portable electric nail filing system of embodiment 5 wherein charging base further comprises a charging base power controller and wherein the control box power controller monitors and regulates power intake from an external power source connected to the charging port of the charging base.
16. The portable electric nail filing system of embodiment 15 wherein the charging base power controller operates to direct power from the external power source to charge the rechargeable battery of the charging base.
17. The portable electric nail filing system of embodiment 16 wherein the charging base power controller in a mode of operation directs power from the external power source to charge the rechargeable battery of the charging base.
18. The portable electric nail filing system of embodiment 11, in a mode of operation where the control box is in electrical connection to the charging base, and the charging base is not connected to an external power source, the control box power controller and charging base power controller cooperatively directs depletion of the charging base rechargeable battery prior to depletion of the rechargeable battery of the control box.

## Claims

1. A portable electric nail filing system, the system comprising:
an electric file handpiece;
a control box for supplying power to the electric nail file handpiece, the control box including a rechargeable battery and a processor; and
a charging base for engaging the control box, the charging base operable to recharge the rechargeable battery of the control box while the control box is engaged with the charging base, the charging base comprising a rechargeable battery.

2. The portable electric nail filing system of claim 1, wherein the charging base includes a recess for receiving the control box.

3. The portable electric nail filing system of claim 2, wherein the control box and the recess of the charging base include corresponding electrical contacts that interface to supply power from the charging base to the rechargeable battery of the control box.

4. The portable electric nail filing system of claim 2, wherein the recess is formed at an angle to facilitate use of the electric nail file handpiece while the control box is engaged with the charging base with a reduced possibility of pulling the control box from the charging base.

5. The portable electric nail filing system of claim 1, wherein the rechargeable battery of the charging base is charged through a charging port located within the charging base.

6. The portable electric nail filing system of claim 1, wherein the rechargeable battery of the control box may be charged through a charging port located within the control box.

7. The portable electric nail filing system of claim 1, wherein the electric nail file handpiece has a cord able to be releasably secured to the control box wherein the control box supplies power to the electric file handpiece.

8. The portable electric nail filing system of claim 1, wherein the control box further comprises an LCD display, wherein information is displayed to the user.

9. The portable electric nail filing system of claim 1 wherein, the charging base has an LED indicator to communicate information to the user.

10. The portable electric nail filing system of claim 1 wherein the control box further comprises a control box power controller and the charging base further comprises a charging base power controller.

11. The portable electric nail filings system of claim 6 wherein the control box further comprises a control box power controller and wherein the control box power controller monitors and regulates power intake from an external power source connected to the charging port of the control box.

12. The portable electric nail filing system of claim 5 wherein charging base further comprises a charging base power controller and wherein the control box power controller monitors and regulates power intake from an external power source connected to the charging port of the charging base.

13. The portable electric nail filing system of claim 12 wherein the charging base power controller operates to direct power from the external power source to charge the rechargeable battery of the charging base.

14. The portable electric nail filing system of claim 13 wherein the charging base power controller in a mode of operation directs power from the external power source to charge the rechargeable battery of the charging base.

15. The portable electric nail filing system of claim 10, in a mode of operation where the control box is in electrical connection to the charging base, and the charging base is not connected to an external power source, the control box power controller and charging base power controller cooperatively directs depletion of the charging base rechargeable battery prior to depletion of the rechargeable battery of the control box.
